# EUROPEAN PATENT APPLICATION

(11) **EP 4 422 285 A1**
(43) Date of publication of application: **28.08.2024**
(21) Application number: 24150286.3
(22) Date of filing: 04.01.2024
(51) Int. Cl.: H04W 52/02

(54) **LOW-POWER WIRELESS DEVICE**

(30) Priority: 24.02.2023 FI 20235229
(71) Applicant: Nokia Technologies Oy, 02610 Espoo (FI)
(72) Inventor: KAIKKONEN, Jorma Johannes, Oulu (FI); RANTA-AHO, Karri Markus, Espoo (FI)
(74) Representative: Nokia EPO representatives

(57) **Abstract**

According to an example aspect of the present invention, there is provided an apparatus configured to receive at least one configuration defining a monitoring occasion, one or more of the at least one configuration further defining at least one symbol to be skipped during the respective monitoring occasion, and determine whether a wake-up signal is received in the apparatus using a first configuration from among the at least one configuration by monitoring symbols of a monitoring occasion defined by the first configuration other than the at least one symbol defined as to be skipped, wherein the at least one symbol defined as to be skipped within the monitoring occasion of the first configuration is not monitored in the determining whether the wake-up signal is received.

## Description

### FIELD

The present disclosure relates to transmission and reception arrangements in low-power wireless devices.

### BACKGROUND

Wireless communication devices may be battery-powered, wherefore optimizing use of battery power has long been an aim in design of such devices. Minimizing power drain increases the time a battery lasts before it needs to be recharged or, in the case of non-rechargeable batteries, replaced, which enhances the usability of the overall system as a more diverse set of use cases is enabled.

While personal communication devices, such as smartphones, may be recharged every few days, there are different wireless device types which are challenging to recharge frequently. For example, sensor devices installed in vehicles or buildings may be configured to provide information on liquid flow or temperature readings, or trigger fire alarms, for example, such that they aim to be powered by a stable power source, or a very long-lasting rechargeable or replaceable battery.

### SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided an apparatus comprising at least one processing core and at least one memory storing instructions that, when executed by the at least one processing core, cause the apparatus at least to receive at least one configuration defining a monitoring occasion, one or more of the at least one configuration further defining at least one symbol to be skipped during the respective monitoring occasion, and determine whether a wake-up signal is received in the apparatus using a first configuration from among the at least one configuration by monitoring symbols of a monitoring occasion defined by the first configuration other than the at least one symbol defined as to be skipped, wherein the at least one symbol defined as to be skipped within the monitoring occasion of the first configuration is not monitored in the determining whether the wake-up signal is received.

According to a second aspect of the present disclosure, there is provided an apparatus comprising at least one processing core and at least one memory storing instructions that, when executed by the at least one processing core, cause the apparatus at least to provide to a user equipment at least one configuration defining a monitoring occasion, each one of the at least one configuration defining a monitoring occasion start time, a monitoring occasion duration and a monitoring occasion frequency, one or more of the at least one configuration further defining at least one symbol to be skipped during the respective monitoring occasion, and transmit a wake-up signal to the user equipment using a first configuration from among the at least one configuration, wherein symbols other than the at least one symbol defined to be skipped are used for transmitting the wake-up signal and symbols defined as to be skipped within the monitoring occasion of the first configuration are used by the apparatus for at least one purpose other than wake-up signalling.

According to a third aspect of the present disclosure, there is provided a method comprising receiving, in an apparatus, at least one configuration defining a monitoring occasion, one or more of the at least one configuration further defining at least one symbol to be skipped during the respective monitoring occasion, and determining whether a wake-up signal is received in the apparatus using a first configuration from among the at least one configuration by monitoring symbols of a monitoring occasion defined by the first configuration other than the at least one symbol defined as to be skipped, wherein the at least one symbol defined as to be skipped within the monitoring occasion of the first configuration is not monitored in the determining whether the wake-up signal is received.

According to a fourth aspect of the present disclosure, there is provided a method comprising providing to a user equipment at least one configuration defining a monitoring occasion, each one of the at least one configuration defining a monitoring occasion start time, a monitoring occasion duration and a monitoring occasion frequency, one or more of the at least one configuration further defining at least one symbol to be skipped during the respective monitoring occasion, and transmitting a wake-up signal to the user equipment using a first configuration from among the at least one configuration, wherein symbols other than the at least one symbol defined to be skipped are used for transmitting the wake-up signal and symbols defined as to be skipped within the monitoring occasion of the first configuration are used for at least one purpose other than wake-up signalling.

According to a fifth aspect of the present disclosure, there is provided an apparatus comprising means for receiving, in an apparatus, at least one configuration defining a monitoring occasion, one or more of the at least one configuration further defining at least one symbol to be skipped during the respective monitoring occasion, and determining whether a wake-up signal is received in the apparatus using a first configuration from among the at least one configuration by monitoring symbols of a monitoring occasion defined by the first configuration other than the at least one symbol defined as to be skipped, wherein the at least one symbol defined as to be skipped within the monitoring occasion of the first configuration is not monitored in the determining whether the wake-up signal is received.

According to a sixth aspect of the present disclosure, there is provided an apparatus comprising means for providing to a user equipment at least one configuration defining a monitoring occasion, each one of the at least one configuration defining a monitoring occasion start time, a monitoring occasion duration and a monitoring occasion frequency, one or more of the at least one configuration further defining at least one symbol to be skipped during the respective monitoring occasion, and transmitting a wake-up signal to the user equipment using a first configuration from among the at least one configuration, wherein symbols other than the at least one symbol defined to be skipped are used for transmitting the wake-up signal and symbols defined as to be skipped within the monitoring occasion of the first configuration are used for at least one purpose other than wake-up signalling.

According to a seventh aspect of the present disclosure, there is provided an apparatus, comprising a non-transitory computer readable medium having stored thereon a set of computer readable instructions that, when executed by at least one processor, cause an apparatus to at least receive at least one configuration defining a monitoring occasion, one or more of the at least one configuration further defining at least one symbol to be skipped during the respective monitoring occasion, and determine whether a wake-up signal is received in the apparatus using a first configuration from among the at least one configuration by monitoring symbols of a monitoring occasion defined by the first configuration other than the at least one symbol defined as to be skipped, wherein the at least one symbol defined as to be skipped within the monitoring occasion of the first configuration is not monitored in the determining whether the wake-up signal is received.

According to an eighth aspect of the present disclosure, there is provided an apparatus, comprising a non-transitory computer readable medium having stored thereon a set of computer readable instructions that, when executed by at least one processor, cause an apparatus to at least provide to a user equipment at least one configuration defining a monitoring occasion, each one of the at least one configuration defining a monitoring occasion start time, a monitoring occasion duration and a monitoring occasion frequency, one or more of the at least one configuration further defining at least one symbol to be skipped during the respective monitoring occasion, and transmit a wake-up signal to the user equipment using a first configuration from among the at least one configuration, wherein symbols other than the at least one symbol defined to be skipped are used for transmitting the wake-up signal and symbols defined as to be skipped within the monitoring occasion of the first configuration are used by the apparatus for at least one purpose other than wake-up signalling.

### BRIEF DESCRIPTION OF THE DRAWINGS

FIG. 1A illustrates an example system in accordance with at least some embodiments of the present invention;
FIG. 1B illustrates an example wireless receiver in accordance with at least some embodiments of the present invention;
FIG. 2A illustrates a time-frequency graph of a wake-up signal monitoring occasion;
FIG. 2B illustrates a monitoring occasion in accordance with at least some embodiments;
FIG. 3 illustrates an example apparatus capable of supporting at least some embodiments of the present invention;
FIG. 4 illustrates signalling in accordance with at least some embodiments of the present invention, and
FIG. 5 is a flow graph of a method in accordance with at least some embodiments of the present invention.

### DETAILED DESCRIPTION

Herein are described methods for wireless wake-up signal transmission and reception, which aim to provide an optimized wake-up signalling solution to a wireless communication device, to trigger the wireless communication device to switch on a wireless transceiver usable to communicate data. The wireless transceiver may alternatively be switched from a more reduced activity state to a less reduced activity state. In detail, a monitoring occasion for receiving a wake-up signal is configured in a user equipment, such that the configured monitoring occasion is no longer a contiguous sequence of symbols, but some symbols in an overall duration of the monitoring occasion are defined as skipped. The network may employ the skipped symbols for other purposes than wake-up signalling, such as downlink control channel transmission, for example. This enables a more efficient use of communication resources.

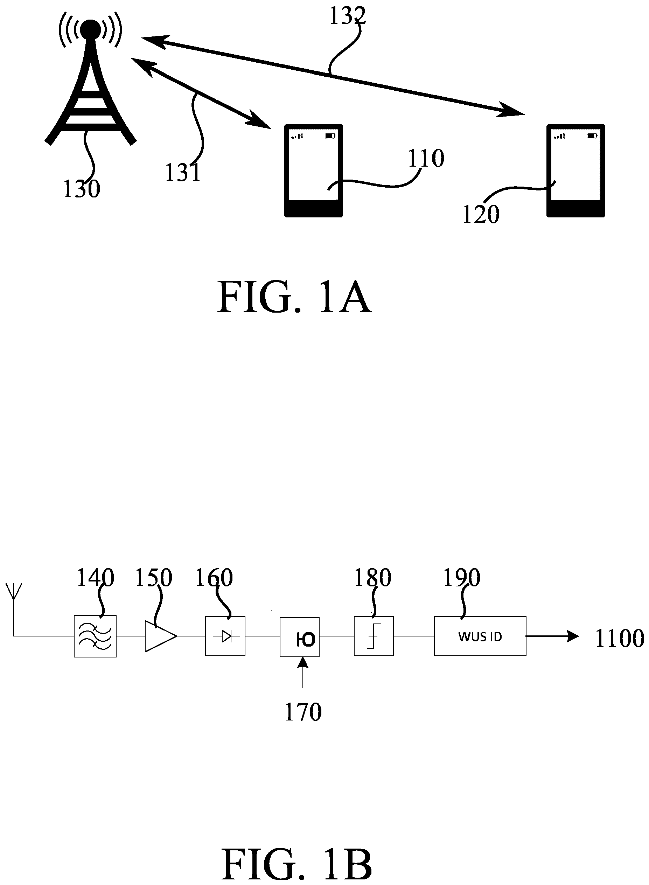

FIG. 1A illustrates an example system in accordance with at least some embodiments of the present invention. A base node 130, such as a cellular base station 130, is configured to operate based on a suitable technical standard, such as long term evolution, LTE, fifth generation, 5G, or sixth generation, 6G, for example. Another term for 5G is new radio, NR. A yet further example of a suitable technical standard is 5G-Advanced. A cellular technical standard may be published by the 3^{rd} generation partnership project, 3GPP, for example. A base station may be referred to as a radio node, network node, node, eNode B, eNB, gNB network device. The base station may comprise a centralized unit, gNB-CU, and one or more distributed unit, gNB-DU. A gNB-CU and gNB-DU(s) may be connected using e.g. an F1 interface. Alternatively, base node 130 may be a non-cellular base node, such as, for example, a wireless local area network, WLAN, or worldwide interoperability for microwave access, WiMAX, access point.

In addition to base node 130, the system of FIG. 1 also includes two user equipments, UEs, 110, 120. A UE may be referred to as a terminal, a terminal device, a user device or simply a device. The UEs 110, 120 comprise a wireless transceiver configured to communicate using a cellular and/or non-cellular radio technology, such as one or more of those mentioned above, for example, to obtain interoperation with base node 130. A user equipment 110, 120 may comprise, for example, an Internet of Things, IoT, node, such as a sensor node, or a utility meter which is not an IoT node. UEs 110, 120 are illustrated as including a display screen, however this is by no means compulsory as many UEs suitable for use with the presently disclosed methods are optimized for low power consumption and may well lack visual display screens. Rather, these UEs may be configured to provide, for example, an uplink transmission to base node 130 when requested, or according to a pre-configured time schedule for reporting. The uplink transmission may comprise sensor data generated by the respective UE 110, 120, or mesh-network data, for example, received in the UEs 110, 120 from further devices, which are not illustrated in FIG. 1A for the sake of clarity of the illustration.

UEs 110, 120 are configured to spend time in an energy saving state when not transmitting or receiving via the wireless transceiver. The energy saving state comprises that the wireless transceiver of UE 110, 120 is in a low-power state. The low-power state of the wireless transceiver may be one where the wireless transceiver is switched off, or placed in a hibernated or otherwise inactive state where the wireless transceiver does not monitor for incoming transmissions and does not transmit signals. Further examples of names used of the hibernated or inactive state are discontinuous reception, DRX, sleep state, DRX-Off state, RRC_Idle and RRC_Inactive state. "Inactive" does not necessarily to mean that no actions at all are performed, although it may mean that. In the energy saving state, the UE may monitor for wake-up signals, WUSs, for example. For example, the energy saving state may be referred to as a WUS monitoring mode or state. In the energy saving state, the main radio of the UE may be off and the UE may monitor WUS with a low power wireless receiver, LP-WUR, for example.

The energy saving state may be extensive and extend also to other systems of UE 110, 120 than the wireless transceiver. For example, a processor, chip or chipset of UE 110, 120 may be set to a hibernated state when the UE is in the energy saving state. UEs 110, 120 may be powered by a non-rechargeable battery which aims to power the UEs 110, 120 for months, or even a year, wherefore optimization of power consumption needs to be conducted carefully. In particular, monitoring for transmissions using a cellular or non-cellular radio technology such as the ones mentioned above, for example, consumes necessarily so much power that in the UEs 110, 120 of FIG. 1A, these radio technologies are not used in the energy saving state. To enable communication with a UE 110, 120 in the energy saving state, the UEs 110, 120 are equipped with a wireless receiver which may be separate from the wireless transceiver which is usable with the cellular or non-cellular technology to receive modulated payload data from the wireless communication system. Base node 130 may provide a signal, such as a wake-up signal, that the wireless receiver is configured to detect. The wireless receiver may be referred to, for example, as a low-power receiver, an ultra-low power receiver or a wake-up receiver, WUR or LP-WUR.

Responsive to the wake-up signal, the UE that received the wake-up signal transitions from the energy saving state to a higher energy state. In detail, the UE switches its wireless transceiver from the low-power state to an active state. In the higher energy state, also other parts of the UE than the wireless transceiver may be in a more energy consuming mode, compared to the energy saving state. Examples of the active state include a switched-on state, a radio resource control, RRC_Active, DRX-On and DRX-Active. In the active state, the wireless transceiver is able to receive and/or transmit information using the wireless transceiver based on the cellular or non-cellular radio technology that the UE is configured to use. Initially in the active state, the device may be in an RRC_Idle state, from which an RRC connection may be established whereby the state is switched to RRC_Connected. The wireless transceiver is the main radio of the UE, while the wireless receiver is used to receive the signal to end the energy saving state.

In the situation of FIG. 1A, UE 110 has a clearer radio path to base node 130, via radio link 131, wherefore a signal transmitted from base node 130 to UE 110 is received with less path loss than a signal transmitted from base node 130 to UE 120 via radio link 132. In general UE 120 may be further away from base node 130, but this is not necessarily the case since the radio paths may be more complex in nature and include reflections from objects, which incur path loss without necessarily involving great distances. To provide a signal to UE 120, the signal may be transmitted from base node 130 using a higher transmit power, and/or using a larger number of repetitions. Repetitions may take place sequentially in time, and/or at least in part concurrently in time, using a different frequency. The repetitions may be combined in UE 120 by integrating on-duration energy and off-duration energy not only from one transmission, but from plural transmissions, for example. On-duration is the predefined portion of the transmission containing signal, while the rest of the transmission is off-duration. Off-duration energy may be used e.g. for determining a detection threshold.

Base node 130 may provide to UE 110, 120 a configuration defining a monitoring occasion. The configuration may define for the monitoring occasion a monitoring occasion start time, a monitoring occasion duration and a monitoring occasion frequency. The start time, duration and frequency may be provided to the UE in separate messages, that is, they need not be provided from the network in a same message. The monitoring occasion start time specifies when the monitoring occasion will begin, and may be expressed in terms of absolute time, system time, or a time point in terms of a frame structure of the communication system, for example. A slot number and a symbol number within that slot is one way to express the starting time. The monitoring occasion duration specifies how long the monitoring occasion lasts, such that the monitoring occasion ends once the duration has elapsed from the monitoring occasion start time. The duration may be expressed as a number of OFDM symbols, for example. The monitoring occasion frequency defines which frequency, or frequency band, is used in electromagnetically and wirelessly transmitting a wake-up signal to the UE. The configured monitoring occasion(s) may be repeating in time, for example repeating with a fixed periodicity at constant periods.

Base node 130 may provide the configuration defining the monitoring occasion, or indeed plural configurations defining plural monitoring occasions, when the UE 110, 120 has its wireless transceiver in the active state. UE 110, 120 may use the configured monitoring occasion(s) to monitor for wake-up signals when the wireless transceiver is in the low-power state, for example using the separate wireless receiver.

A wake-up signal may comprise a preamble, a message part and an error control part. An example error control part is a cyclic redundancy check, CRC, part. The preamble may be used for initial threshold estimation, for example for on-off keying, OOK, detection. The preamble may comprise a synchronization segment, to enable the receiver to align its timing to the start of the message. The length of the preamble may depends on the adopted waveform and architecture of the receiver used to receive the wake-up signal, as well as other possible uses of the preamble. Such possible other uses include coverage detection and cell identity signalling. The preamble length may range between 16 - 24 bits or chips, for example.

As to the message part, it is the information payload of the wake-up signal, and different sizes for it may be considered. The smallest size could be considered to be achieved when sub-grouping bits associated to a certain paging occasion, PO, are included. For example, 8 bits per PO enables a number of POs, and thus UEs, to be addressed with a single wake-up signal, resulting payload size in range of 32 bits in 3GPP systems. Also larger payloads may be considered, for example, a wake-up signal may include one or more full UE identities, or subscriber identities. As to the error control part, a CRC sequence of 8 bits may be taken as a minimum assumption for practical implementations. Another error control code, such as a Hamming code, may be used alternatively to CRC. Further, the message part and the error control part may be Manchester coded, which would double the bit length of these parts.

Assuming discrete Fourier transform-spread orthogonal frequency division multiplexing, DFT-s-OFDM, based OOK is adopted for the wake-up signal, several bits could be transmitted in one OFDM symbol in a 5G system, increasing the spectrum efficiency and symbol rate. It also is possible to approximate an OOK signal inside an OFDM symbol. To accomplish this, the wanted OOK signal is up-sampled to the desired sampling rate and converted into frequency domain by an M-point DFT. A range of bits per OFDM symbol may vary from 2 to 8 bits, for example. The feasible range is limited by inter-symbol interference and receiver analogue-to-digital converter, ADC, sampling rate, to limit power consumption. For the sake of discussion it may be assumed that 4 bits are transmitted per OFDM symbol using DFT-s-OFDM. This means that in as slot length of 14 OFDM symbols, a maximum of 56 OOK bits could be transmitted.

Assuming the lower range of numbers discussed above, the wake-up signal size could be (16+32*2+8*2) 96 MC-OOK bits, or chips, as the preamble part may be left without Manchester encoding. MC-OOK will be discussed in more detail below. Thus the wake-up signal length could be 24 OFDM symbols, for example. Thus, the wake-up signal can be seen as rather easily exceeding the length of one slot in a 5G/NR system, for example.

In the frequency domain, the wake-up signal may span 5 or 20 MHz, for example. This implies, especially for typical carrier bandwidths in frequency range 1, FR1, of 5G, that quite a large portion of the carrier could be taken up by a wake-up signal. Based on the foregoing, a challenge arises from the fact that in realistic real-life scenarios a wake-up signal may well be longer than one slot, thereby overlapping with downlink control signal resources. As control signal resources cannot be adapted very dynamically, the system would need to be permanently restricted to enable multiplexing with wake-up signals which exceed slot boundaries. This would reduce both physical downlink control channel, PDCCH, coverage as well as capacity in terms of a number of PDCCH candidates that could be supported by the system.

FIG. 1B illustrates an example wireless receiver in accordance with at least some embodiments of the present invention. In detail, FIG. 1B illustrates an example wireless receiver suitable for receiving in the UE a wake-up signal from base node 130. A signal, such as a signal based on using on-off keying, OOK, or MC-OOK, is provided from a receive antenna to a band-pass filter 140, thence to a low-noise amplifier 150, thence to an envelope detector 160, thence to an integrator 170 which is configured to reset at a symbol time interval. The integrator 170 provides its output to a comparator 180, which in turn provides its output to a correlator 190 which detects whether a specific wake-up signal, identified with a wake-up signal identity, WUS ID, has been detected. If this is the case and the UE is configured to respond to this specific wake-up signal, then a signal 1100 is provided which switches on the wireless transceiver, which is the main radio of the UE, as noted above. After the envelope detector 160, the signal will be a low frequency signal being either low when a 0 is received or high when a 1 is received. By integrating the signal over each symbol duration, the signal noise is suppressed, and the comparator 180 can then determine if the received symbol is a 0 or 1 by comparing with the average signal level. Finally, in correlator 190 the detected bit sequence is correlated with the expected signal.

An advantage of the receiver illustrated in FIG. 1B is that it does not require a mixer, an analogue-to-digital converter or advanced baseband processing, making it inherently a very power-efficient solution. In practice such receivers may be more complex than the one illustrated, but FIG. 1B demonstrates that the receiver ideally may be very simple, which is why OOK and multicarrier OOK, MC-OOK, are attractive modulation schemes to select when designing the wake-up signal to be sent to the wireless receiver. In the most straightforward implementation, MC-OOK transmission may be performed by switching a set of subcarriers ON/OFF per OFDM symbol. Since this signal is not just a single carrier being switched ON and OFF, but rather multiple subcarriers, the modulation is multicarrier OOK, MC-OOK. The receiver illustrated in Fig. 1B is capable of receiving a wake-up signal using OOK or MC-OOK. Further examples of waveforms usable in delivering a wake-up signal include multicarrier frequency-shift keying, MC-FSK, and cyclic-prefix OFDM, CP-OFDM.

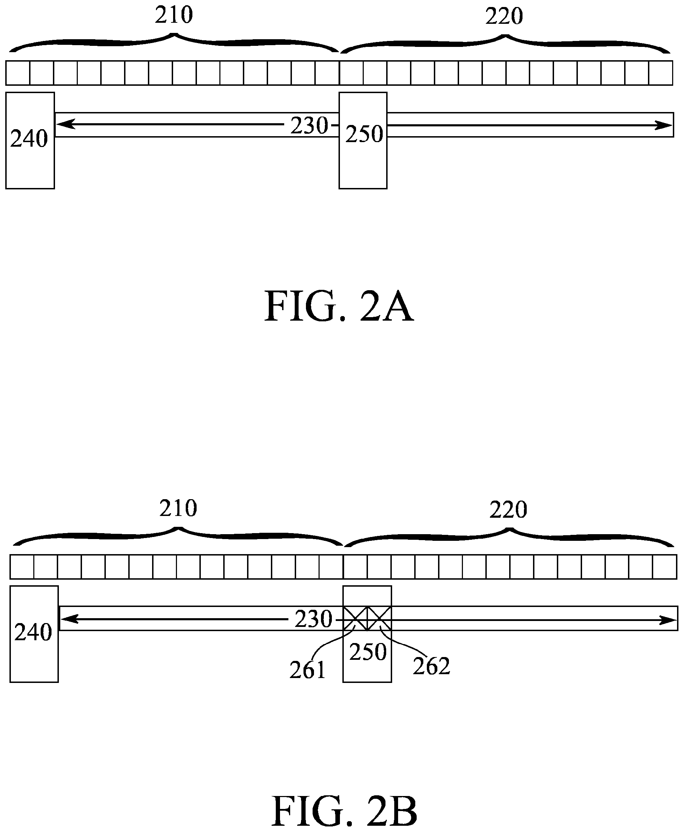

FIG. 2A illustrates a time-frequency graph of a wake-up signal monitoring occasion. Time advances from the left to the right, while frequency is in the vertical direction of the figure. Two consecutive and contiguous time slots 210, 220 are present, each time slot comprising fourteen individual OFDM symbols. The symbols of one slot form a contiguous sequence, that is, the symbols follow each other in time such that the next symbol begins at the same time the previous one ends, the symbols forming a single block.

A wake-up signal monitoring occasion 230 spans almost two time slots in length. The monitoring occasion begins at the start of the third symbol of time slot 210, and ends 26 symbols later. Control resource set 240 takes place during the first two symbols of time slot 210. Control resource set 250 takes place during the first two symbols of time slot 220. A core resource set may, for example, occupy the first symbol, the first two symbols or the first three symbols of a slot. To ensure that PDCCH can be heard in full cell coverage, higher aggregation levels are preferred, valid aggregation levels including 4, 8 and 16. As can be seen from FIG. 2A, there is a collision of control resource set 250 and wake-up signal monitoring occasion 230 during the first two symbols of time slot 220. Control resource sets are used by e.g. a 5G system to carry PDCCH and downlink control information, DCI. Similar repetitive communication resource reservations are used in other systems than 5G to ensure important control information may be transmitted.

Removing control resource set 250 to make way for wake-up signal monitoring occasion 230 would adversely affect the system's ability to signal to the set of UEs, with questionable gain as many UEs would only infrequently receive their wake-up signal, being on the energy saving state for long periods at a time.

FIG. 2B illustrates a monitoring occasion in accordance with at least some embodiments. Like numbering denotes like structure as in FIG. 2A. The situation of FIG. 2B differs from the one of FIG. 2A in that symbols 261 and 262, being the first two OFDM symbols of slot 220, which would collide with control resource set 250, are configured as to be skipped in monitoring occasion 230. The network, when transmitting a wake-up signal on monitoring occasion 230, will not transmit the wake-up signal during symbols 261 and 262, these symbols being skipped over in the transmission of the wake-up signal. The base node may be configured to use these symbols for another purpose, such as PDCCH or DCI, for example. Correspondingly the UE, when monitoring for a wake-up signal during monitoring occasion 230, will skip symbols 261 and 262 and not collect energy from them for use in a determination concerning whether a wake-up signal is present, or decoding the content of a wake-up signal. The symbols to be skipped may land on different parts of different wake-up signal monitoring occasions, and/or there may be configured monitoring occasions that contain no symbols to be skipped, that is, all configured monitoring occasions need not comprise symbols to be skipped.

The system may map the wake-up signal bits which would be sent in symbols 261 and 262 to the third and fourth symbols of slot 220, effectively shifting forward in time the part of the wake-up signal following the skipped bits by a length of time equal to the combined time duration of the skipped bits. Thus the wake-up signal would be lengthened at its end with a number of symbols equal to the number of skipped symbols. Alternatively, the bits which would be sent in symbols 261 and 262 may be left out and the subsequent symbols transmitted as if symbols 261 and 262 had been sent, effectively puncturing the bits of the skipped symbols out of the transmitted wake-up signal. The wake-up signal may itself be detected even if a few, such as one, two or three, symbols are skipped, since the transmission will use the error control part and may use interleaving and channel coding in addition to the error control part.

The illustrated mechanism provides the benefit that the wake-up signal may be transmitted without disturbing control resource set access to communication resources. This reduces delays in the system for all UEs as the control resource sets are unaffected by monitoring occasions for wake-up signals, and enables low-latency delivery of the wake-up signals when they're needed. As noted earlier, in many cases the wake-up signal is provided only relatively rarely.

The configuration of the monitoring occasion may identify the symbols as to be skipped by listing these symbols one by one, or by identifying a first symbol to be skipped and a number of contiguous symbols starting from the first symbol to be skipped. As a yet further alternative, the configuration of the monitoring occasion may specify the monitoring occasion as being composed of more than one part, the parts being separated from each other by the symbols to be skipped.

The symbols to be skipped may be contiguous, to create a block of communication resources available for a different use from wake-up signal provision. The symbols to be skipped may alternatively form more than one contiguous block of symbols, for example one contiguous block of skipped symbols per slot.

In some embodiments the base node signals, using dedicated and/or broadcast signalling, the number of symbols from the beginning of each slot that are to be skipped. The indication may then be common for all downlink slots.

In some embodiments, UE is configured to implicitly use the control resource set configuration in use to skip symbols in configured wake-up signal monitoring occasions. In detail, in these embodiments the UE skips the symbols allocated to the control resource set. In these cases, the network configures the monitoring occasions by signalling the monitoring occasions and control resource sets to the UE. These configurations may be provided in separate messages. For example, in these embodiments the UE may use search space set, SSset, information provided in master information block, MIB, and system information block 1, SIB1, for IDLE/Inactive mode UEs, together with common search space configurations in MIB and SIB 1 (for example Type0 common search space, CSS, (pdcch-ConfigSIB1 or searchSpaceSIB1), Type0A-CSS (searchSpaceOtherSystemInformation), Type1-CSS (ra-SearchSpace), Type2-CSS (pagingSearchSpace)) to determine the location and timing of symbols reserved for use other than wake-up signals.

In some embodiments, the UE accounts for Type1-CSS set related reserved symbols the random access configuration (e.g. ra-ResponseWindow after the ROs) by skipping these symbols in wake-up signal monitoring and decoding. In some embodiments, the UE accounts for Type2-CSS related reserved symbols by skipping these symbols in wake-up signal monitoring and decoding. In some embodiments, CONNECTED mode UEs also uses the Type3-CSS and UE specific search space, USS, configurations (in addition to related control resource set configurations) to determine implicitly the reserved symbols, which are then considered as to be skipped in wake-up signal monitoring and decoding.

When detecting the wake-up signal, the UE may assume, that if the monitoring occasion overlaps with the symbols to be skipped, the wake-up signal is not sent in these symbols. In some embodiments the symbols to be skipped are assumed to be excluded in the mapping of the wake-up signal to physical resources, so that these symbols are skipped in the mapping. The total number of symbols to which the wake-up signal is mapped, may be maintained unchanged. In another possible implementation, the symbols indicated as to be skipped are assumed to be punctured away, that is removed, from the bits to be transmitted after mapping to physical resources.

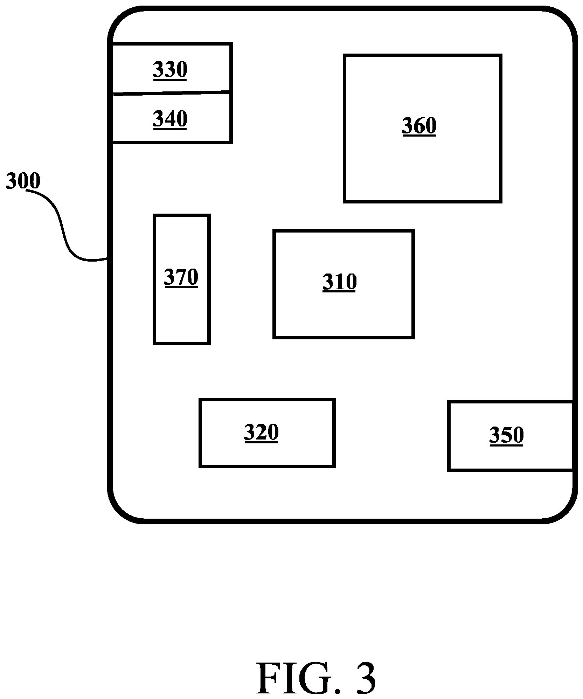

FIG. 3 illustrates an example apparatus capable of supporting at least some embodiments of the present invention. Illustrated is device 300, which may comprise, for example, a UE 110, 120 or, in applicable parts, a base node 130, of FIG. 1A. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. When processor 310 comprises more than one processor, device 300 may be a distributed device wherein processing of tasks takes place in more than one physical unit. Processor 310 may be a control device. A processing core may comprise, for example, a Cortex-A8 processing core manufactured by ARM Holdings or a Zen processing core designed by Advanced Micro Devices Corporation. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310 may be means for performing method steps in device 300, such as storing, processing, switching, receiving, running, providing, and transmitting. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analogue and/or digital circuitry, and (b) combinations of hardware circuits and software, such as, as applicable: (i) a combination of analogue and/or digital hardware circuit(s) with software/firmware and (ii) any portions of hardware processor(s) with software (including digital signal processor(s)), software, and memory(ies) that work together to cause an apparatus, such as a UE or base node, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300. Memory 320 may be non-transitory. The term "non-transitory", as used herein, is a limitation of the medium itself (that is, tangible, not a signal) as opposed to a limitation on data storage persistency (for example, RAM vs. ROM).

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, 5G, long term evolution, LTE, IS-95, wireless local area network, WLAN, and/or worldwide interoperability for microwave access, WiMAX, standards, for example. Transmitter 330 and receiver 340 together comprise a wireless transceiver, the main radio of the device.

Device 300 may comprise a wireless receiver 350. Wireless receiver 350 may be configured to receive a wireless wake-up signal, for example using OOK, multicarrier-OOK, MC-OOK, or multicarrier-frequency shift keying, MC-FSK. Wireless receiver 350, which may be referred to as a wake-up signal wireless receiver, when present, may be distinct from wireless transceiver 330, 340. An example architecture of wireless receiver 350 is illustrated in FIG. 1B.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to accept incoming telephone calls, to originate telephone calls or video calls, to browse the Internet, to manage digital files stored in memory 320 or on a cloud accessible via transmitter 330 and receiver 340, and/or to play games.

Device 300 may comprise or be arranged to accept a user identity module 370. User identity module 370 may comprise, for example, a subscriber identity module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above.

Processor 310, memory 320, transmitter 330, receiver 340, wireless receiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

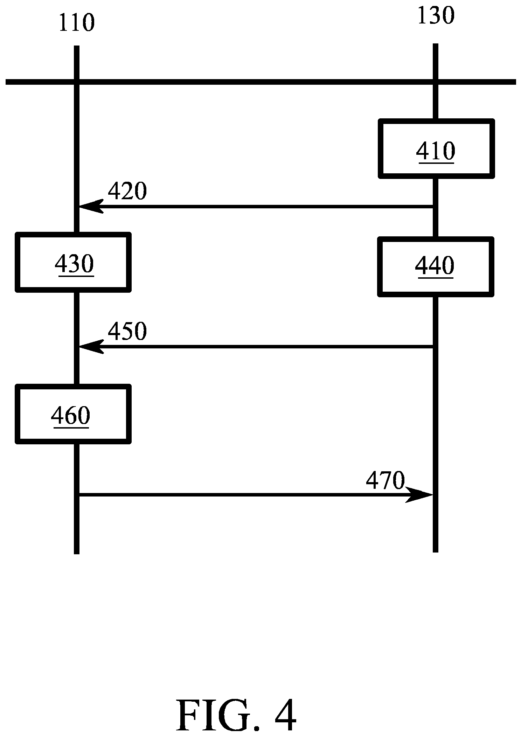

FIG. 4 illustrates signalling in accordance with at least some embodiments of the present invention. The vertical axes correspond to UE 110 and base node 130 of FIG. 1A. Time advances from the top toward the bottom.

In phase 410, the network determines to provide UE 110 with a configuration of a monitoring occasion. In some embodiments, the network determines to provide the UE with plural configurations of monitoring occasions. In phase 420 the configuration, or configurations, is, or are, provided to UE 110. In some embodiments, UE 110 enters the energy saving state as a response to being configured with the monitoring occasion(s). As noted above, the monitoring occasion(s) may be repeating in time. At least one of the configuration(s) relates to a monitoring occasion wherein one or more OFDM symbols are to be skipped in reception of the wake-up signal. The network may provide the configuration in one or more message. For example the symbols to be skipped may be configured at the same time as provision of other monitoring occasion parameters, such as start time, duration and frequency of the monitoring occasion. As another example, the symbols or bits to be skipped may have already been provided to the UE earlier, in connection with configuring control resource set symbols, for example, such that the UE will automatically skip symbols allocated to a control resource set.

In phase 430, UE 110 begins to monitor for wake-up signals, using the monitoring occasion(s) configured in UE 110 in phase 420. At this time, the UE is in the energy saving state. On the network side, at some point, phase 440, the network determines that it wants to reach UE 110. Phases 430 and 440 do not need to occur at the same time, indeed in a typical case phase 440 may occur quite some time after phase 430.

In phase 450, base node 130 transmits a wake-up signal to UE 110, using a monitoring opportunity configured in phase 420. Symbols configured in the monitoring opportunity configuration as to be skipped are skipped in the transmission, either by puncturing them from the transmission, or by extending the transmission in the time domain, as discussed herein above. In case the transmission is extended, it may extend further in time than the nominal monitoring occasion duration included in the configuration of the monitoring occasion. In phase 460 UE 110 detects the wake-up signal and wakes up from the energy saving state by at least switching its wireless transceiver to an active state. Subsequently, phase 470, UE 110 and base node 130 carry out a paging procedure, wherein the UE uses the wireless transceiver in the paging procedure.

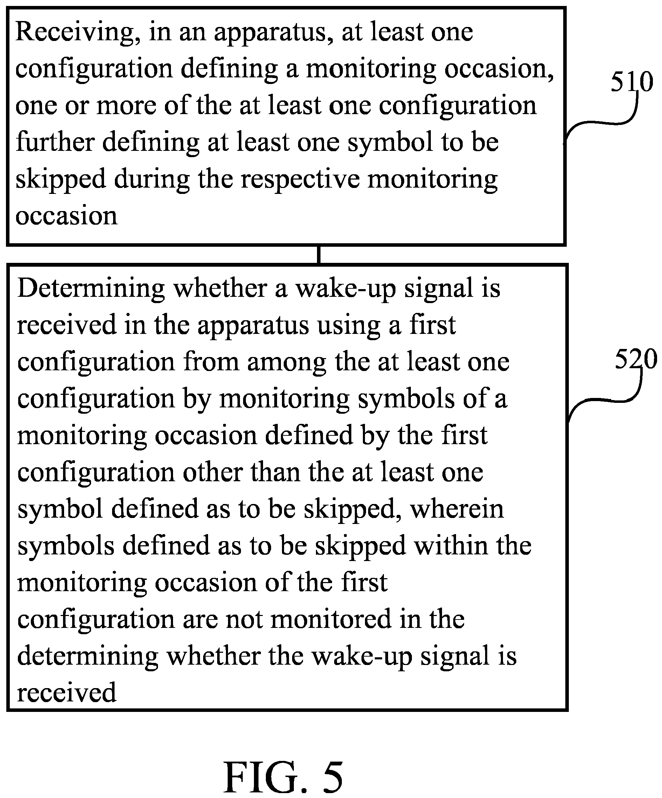

FIG. 5 is a flow graph of a method in accordance with at least some embodiments of the present invention. The phases of the illustrated method may be performed in base node 130, or in a control device configured to control the functioning thereof, when installed therein.

Phase 510 comprises receiving, in an apparatus, at least one configuration defining a monitoring occasion, one or more of the at least one configuration further defining at least one symbol to be skipped during the respective monitoring occasion. Phase 520 comprises determining whether a wake-up signal is received in the apparatus using a first configuration from among the at least one configuration by monitoring symbols of a monitoring occasion defined by the first configuration other than the at least one symbol defined as to be skipped, wherein symbols defined as to be skipped within the monitoring occasion of the first configuration are not monitored in the determining whether the wake-up signal is received.

Each monitoring occasion may define a monitoring occasion start time, a monitoring occasion duration and a monitoring occasion frequency. The monitoring occasion may be a wake-up signal monitoring occasion.

In some embodiments, a user equipment is configured to store a configuration assigning to the apparatus at least one time-frequency resource from among plural time-frequency resources in a resource pool, wherein the time-frequency resources of the resource pool recur in time repeatedly according to a pattern, process a signal received on the at least one assigned time-frequency resource via a wireless receiver comprised in the apparatus, and based on the reception of the signal, switch a wireless transceiver comprised in the apparatus and distinct from the wireless receiver, from a low-power state to an active state and indicate to a base node a number of repetitions used in the reception of the signal.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in managing wireless communication.

## Claims

1. An apparatus comprising at least one processing core and at least one memory storing instructions that, when executed by the at least one processing core, cause the apparatus at least to:
- receive at least one configuration defining a monitoring occasion, one or more of the at least one configuration further defining at least one symbol to be skipped during the respective monitoring occasion, and
- determine whether a wake-up signal is received in the apparatus using a first configuration from among the at least one configuration by monitoring symbols of a monitoring occasion defined by the first configuration other than the at least one symbol defined as to be skipped, wherein the at least one symbol defined as to be skipped within the monitoring occasion of the first configuration is not monitored in the determining whether the wake-up signal is received.

2. The apparatus according to claim 1, wherein each monitoring occasion defined by the at least one configuration repeats in time.

3. The apparatus according to claim 1 or 2, wherein one or more of the at least one configuration defines a consecutive set of symbols to be skipped during the respective monitoring occasion, the consecutive set of symbols repeating once per time slot during the respective monitoring occasion duration.

4. The apparatus according to any of claims 1 - 3, wherein the apparatus is configured to transition away from an energy saving state to a higher energy state state responsive to detecting the wake-up signal.

5. The apparatus according to claim 4, wherein a wireless transceiver of the apparatus is switched on and used to monitor for downlink signals in the higher energy state and the wireless transceiver is switched off in the energy saving state.

6. The apparatus according to any of claims 1 - 5, wherein each of the at least one configuration defines a monitoring occasion start time, a monitoring occasion duration and a monitoring occasion frequency.

7. The apparatus according to claim 6, wherein the apparatus is configured to obtain a part of the first configuration defining the at least one symbol to be skipped in a separate message from a part of the first configuration defining the monitoring occasion start time.

8. An apparatus comprising at least one processing core and at least one memory storing instructions that, when executed by the at least one processing core, cause the apparatus at least to:
- provide to a user equipment at least one configuration defining a monitoring occasion, each one of the at least one configuration defining a monitoring occasion start time, a monitoring occasion duration and a monitoring occasion frequency, one or more of the at least one configuration further defining at least one symbol to be skipped during the respective monitoring occasion, and
- transmit a wake-up signal to the user equipment using a first configuration from among the at least one configuration, wherein symbols other than the at least one symbol defined to be skipped are used for transmitting the wake-up signal and symbols defined as to be skipped within the monitoring occasion of the first configuration are used by the apparatus for at least one purpose other than wake-up signalling.

9. The apparatus according to claim 8, wherein each monitoring occasion defined by the at least one configuration repeats in time.

10. The apparatus according to claim 8 or 9, wherein one or more of the at least one configuration defines a consecutive set of symbols to be skipped during the respective monitoring occasion duration, the consecutive set of symbols repeating once per time slot during the respective monitoring occasion duration.

11. The apparatus according to any of claims 8 - 10, wherein the apparatus is configured to employ discrete Fourier transform-spread orthogonal frequency division multiplexing, DFT-s-OFDM, in transmitting the wake-up signal, wherein plural on-off keyed bits are transmitted in a single orthogonal frequency division multiplexing, OFDM, symbol.

12. A method comprising:
- receiving, in an apparatus, at least one configuration defining a monitoring occasion, one or more of the at least one configuration further defining at least one symbol to be skipped during the respective monitoring occasion, and
- determining whether a wake-up signal is received in the apparatus using a first configuration from among the at least one configuration by monitoring symbols of a monitoring occasion defined by the first configuration other than the at least one symbol defined as to be skipped, wherein the at least one symbol defined as to be skipped within the monitoring occasion of the first configuration is not monitored in the determining whether the wake-up signal is received.

13. The method according to claim 12, wherein each monitoring occasion defined by the at least one configuration repeats in time.

14. The method according to claim 12 or 13, wherein one or more of the at least one configuration defines a consecutive set of symbols to be skipped during the respective monitoring occasion, the consecutive set of symbols repeating once per time slot during the respective monitoring occasion duration.
saving state to a higher energy state responsive to detecting the wake-up signal.

15. A method comprising:
- providing to a user equipment at least one configuration defining a monitoring occasion, each one of the at least one configuration defining a monitoring occasion start time, a monitoring occasion duration and a monitoring occasion frequency, one or more of the at least one configuration further defining at least one symbol to be skipped during the respective monitoring occasion, and
- transmitting a wake-up signal to the user equipment using a first configuration from among the at least one configuration, wherein symbols other than the at least one symbol defined to be skipped are used for transmitting the wake-up signal and symbols defined as to be skipped within the monitoring occasion of the first configuration are used for at least one purpose other than wake-up signalling.
